# EUROPÄISCHE PATENTSCHRIFT

(11) **EP 1 723 713 B1**
(45) Veröffentlichungstag und Bekanntmachung des Hinweises auf die Patenterteilung: **21.09.2011**
(21) Anmeldenummer: 05716899.9
(22) Anmeldetag: 03.03.2005
(51) Int. Cl.: H02K 1/28

(54) **LINEARE ANTRIEBSEINRICHTUNG MIT EINEM EINEN MAGNETTRÄGER AUFWEISENDEN ANKERKÖRPER**
LINEAR DRIVE DEVICE PROVIDED WITH AN ARMATURE BODY HAVING A MAGNET CARRIER
DISPOSITIF D'ENTRAINEMENT LINEAIRE POURVU D'UN CORPS D'INDUIT COMPORTANT UN PORTE-AIMANT

(30) Priorität: 03.03.2004 DE 102004010404
(43) Veröffentlichungstag der Anmeldung: 22.11.2006
(73) Patentinhaber: BSH Bosch und Siemens Hausgeräte GmbH, 81739 München (DE)
(72) Erfinder: RIES, Günter, 91056 Erlangen (DE)
(86) Internationale Anmeldenummer: PCT/EP2005/050956
(87) Internationale Veröffentlichungsnummer: WO 2005/086326

(56) Entgegenhaltungen:
- PATENT ABSTRACTS OF JAPAN Bd. 2000, Nr. 12, 3. Januar 2001 (2001-01-03) -& JP 2000 253640 A (SANYO ELECTRIC CO LTD), 14. September 2000 (2000-09-14)
- PATENT ABSTRACTS OF JAPAN Bd. 013, Nr. 484 (M-886), 2. November 1989 (1989-11-02) & JP 01 190979 A (MARUKA SEIKI KK), 1. August 1989 (1989-08-01)
- PATENT ABSTRACTS OF JAPAN Bd. 014, Nr. 108 (E-0896), 27. Februar 1990 (1990-02-27) & JP 01 308161 A (FUJITSU LTD), 12. Dezember 1989 (1989-12-12)

## Beschreibung

Die Erfindung bezieht sich auf eine lineare Antriebseinrichtung, die wenigstens eine Erregerwicklung zur Erzeugung eines veränderlichen Magnetfeldes mit wenigstens einem zugeordneten, magnetflussführenden Jochkörper sowie einen Ankerkörper enthält, der einen Magnetträger mit wenigstens zwei permanentmagnetischen Magnetteilen aufweist und von dem Magnetfeld der Erregerwicklung in eine axialoszillierende Bewegung zu versetzen ist. Eine entsprechende Antriebseinrichtung geht aus der US 5 559 378 A hervor.

Entsprechende Antriebseinrichtungen werden insbesondere dafür eingesetzt, Pumpkolben von Verdichtern in eine lineare, oszillierende Schwingung zu versetzen. Das System aus einem derartigen Verdichter und einer linearen Antriebseinrichtung wird deshalb auch als Linearverdichter bzw. -kompressor bezeichnet (vgl. z.B. JP 2002-031054 A). Bei entsprechenden bekannten Linearverdichtern bildet der schwingungsfähige Ankerkörper ein Feder-Masse-System, das für eine bestimmte Schwingungsfrequenz ausgelegt ist.

Die bekannte Antriebseinrichtung weist wenigstens eine Erregerwicklung in einem geblechten Eisenjochkörper in E-Form auf. Ihr Magnetfeld übt eine von der Stromrichtung abhängige Kraft auf zwei alternierend gepolte, plattenförmige Permanentmagnete in oder auf einem linear beweglichen Magnetträger eines Ankerkörpers aus, die zum Antrieb z.B. eines Pumpkolbens eines Verdichters genützt werden kann.

Der Luftspalt zwischen den Polflächen eines solchen Jochkörpers und der Oberfläche der Permanentmagneten stellt einen zusätzlichen Widerstand im Magnetkreis dar, der die von der Erregerwicklung erzeugte magnetische Feldstärke im Luftspalt reduziert und damit die Antriebskraft entsprechend herabsetzt.

Bei der oszillierenden Bewegung des Ankerkörpers tauchen seitliche Teile seines Magnetträgers in das Luftspaltfeld an den Polflächen des Jochkörpers ein, wodurch in elektrisch leitfähigen Materialien Wirbelströme, Verluste und eine entsprechende Bremskraft induziert werden. Ein entsprechender Effekt ist bei bekannten Antriebseinheiten zu beobachten, deren Magnetträger im Allgemeinen aus gut leitendem Aluminium gefertigt ist, wobei die Permanentmagnete mit dünnen GFK-Abdeckungen in Aussparungen des Trägers eingeklebt werden können.
Dokument JP 2000 253 640 offenbart eine lineare Antriebseinrichtung gemäβ Präambel von Anspruch 1.

Aufgabe der vorliegenden Erfindung ist es somit, die lineare Antriebseinrichtung mit den eingangs genannten Merkmalen dahingehend auszubilden, dass die erwähnte induzierte Bremskraft vermindert wird.

Diese Aufgabe wird erfindungsgemäß mit den in Anspruch 1 angegebenen Merkmalen gelöst.

Die mit dieser Ausgestaltung der Antriebseinrichtung verbundenen Vorteile sind insbesondere darin zu sehen, dass aufgrund der Verwendung von isolierendem Material für den Magnetträger in diesem unter den Polflächen keine Wirbelströme induziert werden. Damit wird von diesem Bereich des Magnetträgers auch keine zusätzliche Bremskraft verursacht.

Vorteilhafte Ausgestaltungen der erfindungsgemäßen linearen Antriebseinrichtung gehen aus den abhängigen Ansprüchen hervor. Dabei kann die Ausführungsform nach Anspruch 1 mit den Merkmalen eines der Unteransprüche oder vorzugsweise auch mit denen aus mehreren kombiniert werden. Demgemäß können für die Antriebseinrichtung zusätzlich noch folgende Merkmale vorgesehen werden:
- So kann der Magnetträger vollständig aus einem Isolierstoff bestehen. Stattdessen ist es auch möglich, dass er aus Metall besteht, wobei die in den Magnetfeldbereich des Jochkörpers und/oder der Erregerwicklung eintauchenden Teile des Magnetträgers aus einem Isolierstoff ausgebildet sind. Somit werden in diesen Isolierstoffteilen unter den Polflächen keine Wirbelströme induziert.
- Besonders vorteilhaft ist es, wenn jeder Magnetteil gegenüber dem zugeordneten Jochkörper und/oder der Erregerwicklung von einer Magnetabdeckung aus einem ferromagnetischen Blech oder einer entsprechenden Schicht abgedeckt sind, wobei die Magnetabdeckungen axial um eine Beabstandungsfuge beabstandet sind. Diese ferromagnetischen Abdeckungen dienen zum einen zu einer sicheren Befestigung der Magnetteile im oder an dem Magnetträger. Zum anderen verringern sie den wirksamen magnetischen Luftspalt, erhöhen das Feld der Erregerwicklung(en) und damit die Antriebskraft.
- Dabei können vorteilhaft die ferromagnetischen Magnetabdeckungen gegenseitig um einen Abstand a > 2.s beabstandet sein, wobei s der Abstand von der Oberfläche zu den Polflächen des Jochkörpers ist. Ein magnetischer Kurzschluss zwischen den benachbarten Magnetteilen lässt sich so vermeiden.
- Vorteilhaft deckt jede der ferromagnetischen Magnetabdeckungen eine größere Fläche als der jeweils zugeordnete Magnetteil ab.
- Bevorzugt wird als Material für die ferromagnetischen Magnetabdeckungen eine Fe-Si-Legierung vorgesehen ist.

- Die Dicke der ferromagnetischen Abdeckungen wird dabei vorteilhaft zwischen 0,2 und 1,5 mm, vorzugsweise zwischen 0,35 und 1 mm gewählt.
- Zweckmäßig sind die Magnetteile platten- oder blechförmig ausgebildet.
- Bevorzugt ist der erfindungsgemäß ausgebildete Ankerkörper mit einem Pumpkolben eines Verdichters starr verbunden.

Weitere vorteilhafte Ausgestaltungen der erfindungsgemäßen linearen Antriebseinrichtung gehen aus den vorstehend nicht angesprochenen Unteransprüchen und der Zeichnung hervor.

Die Erfindung wird nachfolgend anhand bevorzugter Ausführungsbeispiele unter Bezugnahme auf die Zeichnung noch weiter erläutert. Von deren Figuren zeigen

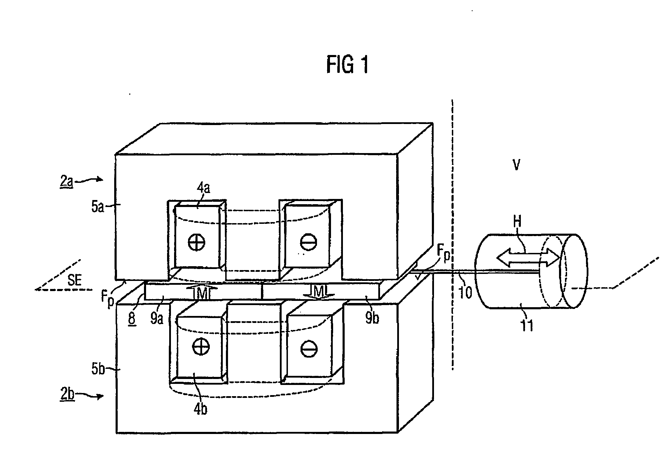

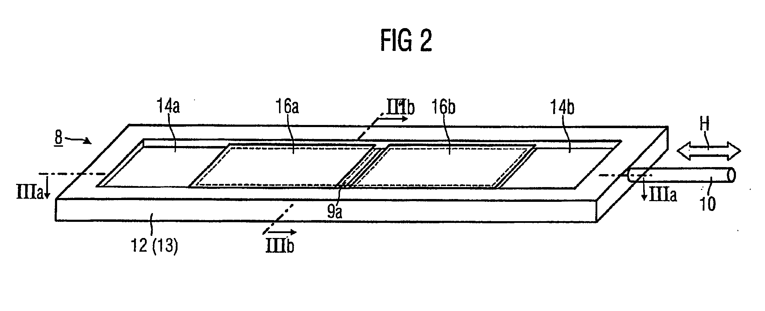

Figur 1 als schematisierte Schrägansicht eine erfindungsgemäße lineare Antriebseinrichtung,

deren Figur 2 eine Schrägansicht eines Ankerkörpers der Antriebseinrichtung,

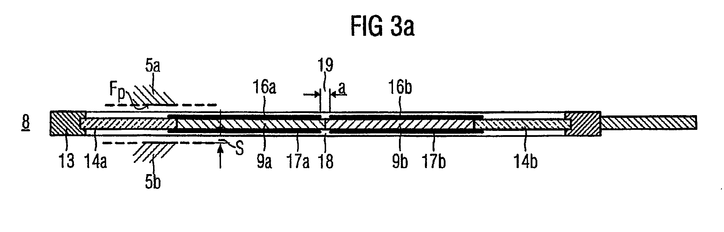

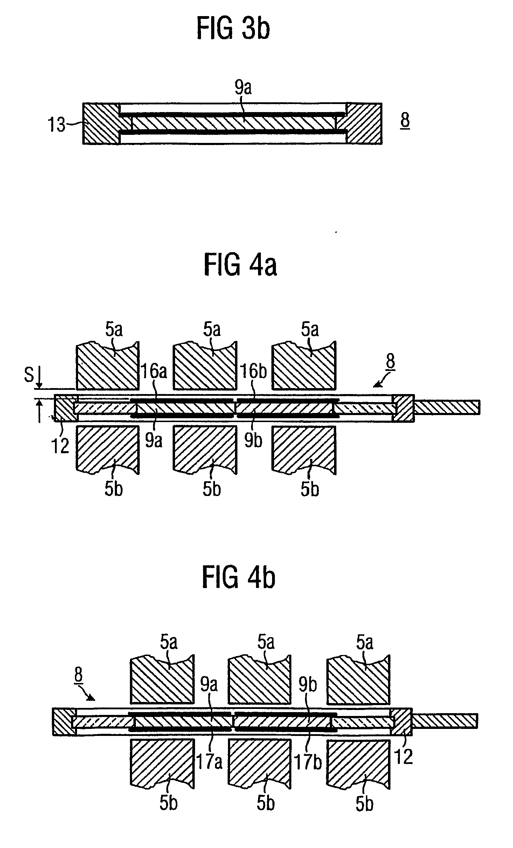

deren Figur 3 in Teilfiguren 3a und 3b einen Längsschnitt bzw. Querschnitt durch den Ankerkörper nach Figur 2,
und

deren Figur 4 in Teilfiguren 4a und 4b zwei verschiedene Positionen des Ankerkörpers nach den Figuren 2 -und 3 bezüglich zweier gegenüberliegender Jochkörper.

Dabei sind in den Figuren sich entsprechende Teile jeweils mit denselben Bezugszeichen versehen.

Bei der in Figur 1 angedeuteten linearen Antriebseinrichtung nach der Erfindung wird von an sich bekannten Ausführungsformen ausgegangen, wie sie für Linearvedichter vorgesehen werden. Aus der Schrägansicht der Figur sind im Wesentlichen nur ein oberer und ein unterer Teil 2a bzw. 2b einer solchen Antriebseinrichtung 2 ersichtlich, wobei diese Teile symmetrisch bezüglich einer Symmetrieebene SE ausgebildet sind. Die Antriebseinrichtung 2 umfasst zwei symmetrisch gegenüberliegende Erregerwicklungen 4a und 4b, denen jeweils wenigstens ein magnetflussführender Jochkörper 5a bzw. 5b zugeordnet ist. Die Jochkörper haben z.B. die bekannte E-Form. In einer zentralen, kanalartigen oder schlitzartigen Öffnung 7 zwischen diesen Jochkörpem bzw. ihren Polflächen F befindet sich ein magnetischer Anker oder Ankerkörper 8 mit beispielsweise zwei Permanentmagneten 9a und 9b. Deren senkrecht zur Symmetrieebene SE antiparallel gerichtete Magnetisierungen M sind durch gepfeilte Linien angedeutet. Der auch als "Ankerschlitten" bezeichnete, in den folgenden Figuren näher ausgeführte Ankerkörper 8 kann in dem veränderlichen Magnetfeld der Erregerwicklungen 4a und 4b in axialer Richtung eine oszillierende Bewegung ausführen. Er weist axial seitliche, nicht näher ausgeführte Verlängerungsteile 10 auf, die vorteilhaft starr mit einem Pumpkolben 11 eines in der Figur nicht näher ausgeführten Verdichters V verbunden sind. Dieser Pumpkolben führt folglich die axial oszillierende Bewegung des Ankerteils 8 um einen Ankerhub H aus.

Die Figuren 2, 3a und 3b zeigen einen erfindungsgemäß ausgebildeten Ankerkörper 8 bzw. -schlitten in detaillierter Darstellung. Dieser weist einen Magnetträger 12 auf, der zumindest in den Teilen aus einem elektrisch isolierenden Material bestehen soll, die während der oszillierenden Bewegung in den von den Polflächen der Jochkörper und Erregerwicklungen begrenzten Magnetfeldbereich eintauchen oder in diesem zu liegen kommen. Die senkrecht auf den Ankerkörper gerichteten Feldlinien legen dabei die Grenzen des Bereichs fest. Vorteilhaft erstrecken sich die genannten Teile aus dem isolierenden Material über diese Bereichsgrenzen hinaus. Der Magnetträger 12 umfasst einen Rahmenteil 13 z.B. aus Aluminium, in dem in axial gegenüberliegenden, stirnseitigen Bereichen steg- oder plattenförmige Isolierstoffeinsätze 14a und 14b befestigt sind. Selbstverständlich kann der Rahmenteil 13 auch vollständig aus einem Isolierstoff gefertigt sein, wobei dann die Isolierstoffeinsätze auch integrierte Teile des Rahmenteils sein können. Zwischen den beiden Isolierstoffeinsätzen 14a und 14b sind zwei axial hintereinander angeordnete plattenförmige Permanentmagnetteile 9a und 9b eingespannt

oder anderweitig befestigt.

Wie ferner den Figuren 2, 3a und 3b zu entnehmen ist, kann jeder der plattenförmigen Magnetteile 9a und 9b auf jeder seiner einem Jochkörper mit Erregerwicklung zugewandten Oberfläche von einer Magnetabdeckung aus einem ferromagnetischen Material abgedeckt sein. Da gemäß dem gewählten Ausführungsbeispiel zwei zur Symmetrieebene SE symmetrische Jochkörper 5a und 5b vorgesehen sein sollen, zwischen den sich der Ankerkörper 8 oszillierend bewegen kann (vgl. Figur 1), sind auf beiden Flachseiten jedes Magnetteils 9a und 9b ferromagnetische Abdeckungen 16a bzw. 16b und 17a bzw. 17b angebracht. Sie verringern den jeweiligen wirksamen magnetischen Luftspalt, wodurch das von den Erregerwicklungen erzeugte Feld erhöht wird. Damit ergibt sich auch eine höhere axiale Antriebskraft auf den Ankerkörper 8 bzw. dessen Magnetteile.

Die ferromagnetischen Abdeckungen 16a, 16b, 17a und 17b können insbesondere in Form eines Bleches oder einer entsprechenden Schicht ausgebildet sein. Vorzugsweise werden hierfür ferromagnetische Bleche verhältnismäßig geringer elektrischer Leitfähigkeit (unter der des bekannten Aluminiums), insbesondere sogenannte Elektrobleche aus einer Fe-Si-Legierung, vorgesehen, wobei die Dicke d dieser Bleche im Allgemeinen zwischen 0,2 mm und 1,5 mm, vorzugsweise zwischen 0,35 mm und 1 mm, liegt. Außerdem ist es vorteilhaft, wenn diese Bleche 3-seitig etwas über die zugeordneten Magnetteile überstehen, den Rand der Aussparungen in dem Rahmenteil 13, in welche die Magnetteile 9a und 9b einzupassen sind, zumindest teilweise überdecken und mit den Magnetteilen in dem Trägerrahmen befestigt, beispielsweise in diesen eingeklebt werden. Im Bereich der Mitte an einer Trennfuge 18 der beiden gegensinnig magnetisierten permanentmagnetischen Magnetteile 9a und 9b sind die zugeordneten ferromagnetischen Bleche 16a und 16b bzw. 17a und 17b gegenseitig beabstandet, um so einen magnetischen Kurzschluss zu verhindern. Die axiale Ausdehnung a einer entsprechenden Beabstandungsfuge 19 sollte vorzugsweise so gewählt werden, dass sie mindestens das 2fache des Abstandes s von der Oberfläche zur Polfläche F des entsprechenden Jochkörpers 5a bzw. 5b beträgt.

Aus den Figuren 4a und 4b ist jeweils die Maximalauslenkung des Ankerkörpers 8 mit seinem Magnetträger 12 nach den Figuren 2, 3a und 3b bei seiner oszillierenden Bewegung unter den Polflächen F der Jochkörper 5a und 5b zu entnehmen.

Bezugszeichenliste

2 Antriebseinrichtung

2a oberer Teil

2b unterer Teil

4a, 4b Erregerwicklungen

5a, 5b Jochkörper

7 Spalt

8 Ankerkörper

9a, 9b Magnetteile

10 Verlängerungsteil

11 Pumpkolben

12 Magnetträger

13 Rahmenteil

14a, 14b Isolierstoffeinsätze

16a, 16b , ferromagnetische Abdeckungen

17a, 17b ferromagnetische Abdeckungen

18 Trennfuge

19 Beabstandungsfuge

M Magnetisierungen

F Polflächen

SE Symmetrieebene

V Verdichter

H Ankerhub

a Ausdehnung

s Abstand

## Patentansprüche

1. Lineare Antriebseinrichtung, die wenigstens eine Erregerwicklung zur Erzeugung eines veränderlichen Magnetfeldes mit wenigstens einem zugeordneten, magnetflussführenden Jochkörper sowie einen Ankerkörper enthält, der einen Magnetträger mit wenigstens zwei permanentmagnetischen Magnetteilen aufweist und von dem Magnetfeld der Erregerwicklung in eine axial oszillierende Bewegung zu versetzen ist, wobei der Magnetträger (12) zumindest in Teilen aus einem elektrisch isolierenden Material ausgebildet ist, die in den von den Polflächen (Fₚ) des Jochkörpers (5a, 5b) und der Erregerwicklung (4a, 4b) begrenzten Magnetfeldbereich eintauchen oder in diesem zu liegen kommen, **dadurch gekennzeichnet, dass** der Magnetträger (12) einen Rahmenteil (13) umfasst, in dem in axial gegenüberliegenden, stirnseitigen Bereichen steg- oder plattenförmige Isolierstoffeinsätze (14a, 14b) befestigt sind, und dass zwischen den Isolierstoffeinsätze (14a, 14b) zwei axial hintereinander angeordnete plattenförmige, permanentmagnetische Magnetteile (9a, 9b) eingespannt oder anderweitig befestigt sind.

2. Einrichtung nach Anspruch 1, **dadurch gekennzeichnet, dass** der Magnetträger (12) vollständig aus einem Isolierstoff besteht, und die Isolierstoffeinsätze (14a, 14b) integrierte Teile des Rahmenteils (13) sind.

3. Einrichtung nach Anspruch 1, **dadurch gekennzeichnet, dass** der Magnetträger (12) aus Metall besteht, wobei die in den Magnetfeldbereich des Jochkörpers (5a, 5b) und/oder der Erregerwicklung (4a, 4b) eintauchenden Teile (14a, 14b) des Magnetträgers (12) aus einem Isolierstoff ausgebildet sind.

4. Einrichtung nach einem der vorangehenden Ansprüche, **dadurch gekennzeichnet, dass** jeder Magnetteil (9a, 9b) gegenüber dem zugeordneten Jochkörper (5a, 5b) und/oder der Erregerwicklung (4a, 4b) von einer Magnetabdeckung (16a, 16b bzw. 17a, 17b) aus einem ferromagnetischen Blech oder einer entsprechenden Schicht abgedeckt sind, wobei die Magnetabdeckungen axial um eine Beabstandungsfuge (19) beabstandet sind.

5. Einrichtung nach Anspruch 4, **dadurch gekennzeichnet, dass** die ferromagnetischen Magnetabdeckungen (16a, 16b bzw. 17a, 17b) gegenseitig um einen Abstand a > 2s beabstandet sind, wobei s der Abstand der Magnetabdeckungen zu der jeweiligen Polfläche (Fₚ) des zugeordneten Jochkörpers (5a, 5b) ist.

6. Einrichtung nach Anspruch 4 oder 5, **dadurch gekennzeichnet, dass** jede ferromagnetische Magnetabdeckung (16a, 16b, 17a, 17b) eine größere Fläche abdeckt als der jeweils zugeordnete Magnetteil (9a bzw. 9b).

7. Einrichtung nach einem der Ansprüche 4 bis 6, **dadurch gekennzeichnet, dass** die ferromagnetischen Magnetabdeckungen (16a, 16b) aus einer Fe-Si-Legierung bestehen.

8. Einrichtung nach einem der Ansprüche 4 bis 7, **dadurch gekennzeichnet, dass** die ferromagnetischen Abdeckungen (16a, 16b, 17a, 17b) jeweils eine Dicke (d) zwischen 0,2 und 1,5_mm, vorzugsweise zwischen 0,35 und 1_mm haben.

9. Einrichtung nach einem der vorangehenden Ansprüche, **gekennzeichnet durch** eine zu einer Symmetrieebene (SE) symmetrische Ausbildung.

10. Einrichtung nach einem der vorangehenden Ansprüche, **dadurch gekennzeichnet, dass** der Ankerkörper (8) mit einem Pumpkolben (11) eines Verdichters (V) starr verbunden ist.

## Claims

1. Linear drive device which includes at least one excitation winding for generating a variable magnetic field with at least one associated yoke body, which conducts magnetic flux, as well as an armature body, which comprises a magnet carrier with at least two permanently magnetic magnet parts and by which the magnetic field of the excitation winding is set into an axially oscillating motion, wherein the magnet carrier (12) is constructed at least in parts from an electrically insulating material which enters into or comes to lie in the magnetic field region bounded by the pole surfaces (Fₚ) of the yoke body (5a, 5b) and the excitation winding (4a, 4b), **characterised in that** the magnet carrier (12) comprises a frame part (13) in which web-shaped or plate-shaped insulating material inserts (14a, 14b) are fastened in the axially opposite end regions, and that two plate-shaped permanently magnetic magnet parts (9a, 9b) arranged axially one after the other are clamped in place or otherwise fastened between the insulating material inserts (14a, 14b).

2. Device according to claim 1, **characterised in that** the magnet carrier (12) consists entirely of an insulating material and the insulating material inserts (14a, 14b) are integrated parts of the frame part (13).

3. Device according to claim 1, **characterised in that** the magnetic carrier (12) consists of metal, wherein the parts (14a, 14b), which enter into the magnetic field region of the yoke body (5a, 5b) and/or the excitation winding (4a, 4b), of the magnet carrier (12) are made of an insulating material.

4. Device according to any one of the preceding claims, **characterised in that** each magnetic part (9a, 9b) is covered relative to the associated yoke body (5a, 5b) and/or the excitation winding (4a, 4b) by a magnet cover (16a, 16b or 17a, 17b) of a ferromagnetic sheet material or a corresponding layer, wherein the magnet covers are axially spaced apart by a spacing gap (19).

5. Device according to claim 4, **characterised in that** the ferromagnetic magnet covers (16a, 16b or 17a, 17b) are mutually spaced apart by a spacing a > 2s, wherein s is the spacing of the magnet covers from the respective pole surface (Fₚ) of the associated yoke body (5a, 5b).

6. Device according to claim 4 or 5, **characterised in that** each ferromagnetic magnet cover (16a, 16b, 17a, 17b) covers a larger area than the respectively associated magnet part (9a or 9b).

7. Device according to any one of claims 4 to 6, **characterised in that** the ferromagnetic magnet covers (16a, 16b) consist of an Fe-Si alloy.

8. Device according to any one of claims 4 to 7, **characterised in that** the ferromagnetic magnet covers (16a, 16b, 17a, 17b) each have a thickness (d) between 0.2 and 1.5 millimetres, preferably between 0.35 millimetres and 1 millimetre.

9. Device according to any one of the preceding claims, **characterised by** a construction which is symmetrical with respect to a plane (SE) of symmetry.

10. Device according to any one of the preceding claims, **characterised in that** the armature body (8) is rigidly connected with a pump piston (11) of a compressor (V).

## Revendications

1. Dispositif d'entraînement linéaire qui comporte au moins un enroulement d'excitation destiné à créer un champ magnétique variable pourvu d'au moins un corps de culasse associé conduisant le flux magnétique, ainsi qu'un corps d'induit qui présente un support d'aimant comprenant au moins deux parties d'aimant à aimantation permanente et qui doit être entrainé dans un mouvement oscillatoire axial par le champ magnétique de l'enroulement d'excitation, au moins des parties dudit support d'aimant (12) étant réalisées en un matériau électriquement isolant, qui plongent ou viennent se positionner dans la région du champ magnétique limitée par les faces polaires (Fₚ) du corps de culasse (5a, 5b) et l'enroulement d'excitation (4a, 4b), **caractérisé en ce que** le support d'aimant (12) comprend une partie formant cadre (13) dans laquelle sont fixés, dans des zones axialement opposées du côté des faces frontales, des inserts isolants (14a, 14b) en forme de barrette ou de plaque, et **en ce que** deux parties d'aimant (9a, 9b) à aimantation permanente en forme de plaque, disposées axialement l'une derrière l'autre, sont enserrées ou fixées d'une autre manière entre lesdits inserts isolants (14a, 14b).

2. Dispositif selon la revendication 1, **caractérisé en ce que** le support d'aimant (12) est constitué entièrement d'un isolant, et lesdits inserts isolants (14a, 14b) sont des éléments intégrés de la partie formant cadre (13).

3. Dispositif selon la revendication 1, **caractérisé en ce que** le support d'aimant (12) est constitué de métal, les éléments (14a, 14b) du support d'aimant (12), qui plongent dans la région du champ magnétique du corps de culasse (5a, 5b) et/ou de l'enroulement d'excitation (4a, 4b), étant formés d'un isolant.

4. Dispositif selon l'une des revendications précédentes, **caractérisé en ce que** chaque partie d'aimant (9a, 9b) par rapport au corps de culasse (5a, 5b) associé et/ou à l'enroulement d'excitation (4a, 4b) est munie d'un recouvrement d'aimant (16a, 16b resp. 17a, 17b) constitué d'une tôle ferromagnétique ou d'une couche correspondante, lesdits recouvrements d'aimant étant axialement espacés d'une fente d'espacement (19).

5. Dispositif selon la revendication 4, **caractérisé en ce que** les recouvrements d'aimant ferromagnétiques (16a, 16b resp. 17a, 17b) sont espacés mutuellement d'une distance a > 2s, s étant la distance des recouvrements d'aimant par rapport à la face polaire respective (Fₚ) du corps de culasse associé (5a, 5b).

6. Dispositif selon la revendication 4 ou 5, **caractérisé en ce que** chaque recouvrement d'aimant ferromagnétique (16a, 16b, 17a, 17b) recouvre une surface plus grande que la partie d'aimant associée respective (9a resp. 9b).

7. Dispositif selon l'une des revendications 4 à 6, **caractérisé en ce que** les recouvrements d'aimant ferromagnétiques (16a, 16b) sont constitués d'un alliage Fe-Si.

8. Dispositif selon l'une des revendications 4 à 7, **caractérisé en ce que** les recouvrements ferromagnétiques (16a, 16b, 17a, 17b) ont chacun une épaisseur (d) comprise entre 0,2 et 1,5_ mm, de préférence entre 0,35 et 1_ mm.

9. Dispositif selon l'une des revendications précédentes, **caractérisé par** une conformation symétrique par rapport à un plan de symétrie (SE).

10. Dispositif selon l'une des revendications précédentes, **caractérisé en ce que** le corps d'induit (8) est relié rigidement à un piston de pompage (11) d'un compresseur (V).
